# EUROPÄISCHE PATENTSCHRIFT

(11) **EP 1 478 068 B1**
(45) Veröffentlichungstag und Bekanntmachung des Hinweises auf die Patenterteilung: **30.06.2010**
(21) Anmeldenummer: 03010905.2
(22) Anmeldetag: 15.05.2003
(51) Int. Cl.: H02H 3/33

(54) **Allstromsensitive Fehlerstrom-Schutzeinrichtung**
All fault-current sensitive protection device
Dispositif de protection sensible à tout courant de défaut

(43) Veröffentlichungstag der Anmeldung: 17.11.2004
(73) Patentinhaber: SIEMENS AKTIENGESELLSCHAFT, 80333 München (DE)
(72) Erfinder: Bauer, Bernhard, 93080 Pentling (DE); Huber, Markus, 93083 Obertraubling (DE); Schmid, Reinhard, 93051 Regensburg (DE)

(56) Entgegenhaltungen:
- EP-A- 0 866 536
- WO-A-01/20741
- WO-A-86/06222
- DE-A- 19 735 412
- SOLLEDER R: "ALLSTROMSENSITIVE FEHLERSTROM-SCHUTZEINRICHTUNG FUER INDUSTRIEANWENDUNG" ELEKTROTECHNISCHE ZEITSCHRIFT - ETZ, VDE VERLAG GMBH. BERLIN, DE, Bd. 115, Nr. 16, 1. August 1994 (1994-08-01), Seiten 896-898,900-901, XP000471380 ISSN: 0948-7387

## Beschreibung

Die Erfindung betrifft eine allstrom-sensitive Fehlerstrom-Schutzeinrichtung mit einer ersten, netzspannungsunabhängigen Sensoreinrichtung und einer zweiten, netzspannungsabhängigen Sensoreinrichtung.

Bei einem Schutzschalter unterscheidet man zwischen einem netzspannungsunabhängigen Fehlerstrom-Schutzschalter (FI-Schutzschalter) und einem netzspannungsabhängigen Differenzstrom-Schutzschalter (DI-Schutzschalter). Die beiden Schutzschalter weisen jeweils einen Summenstromwandler auf, durch den die Leiter des zu überwachenden Leitungsnetzes geführt sind. Beide Summenstromwandler weisen jeweils einen Kern mit einer Wicklung auf, an die eine Sensoreinrichtung angeschlossen ist, welche wiederum mit einer Auslöseeinrichtung verbunden ist. Tritt im Leitungsnetz ein unzulässiger Fehlerstrom auf, so wird dieser vom Summenstromwandler von der zugehörigen Sensoreinrichtung erfasst. Über die Auslöseeinrichtung werden die Leiter des Leitungsnetzes getrennt.

Durch eine Kombination eines pulsstromsensitiven FI-Schutzschalters und eines gleichstromsensitiven DI-Schutzschalters erhält man eine so genannte allstromsensitive Fehlerstromschutzeinrichtung, welche in allen Versorgungsspannungsfällen die Schutzfunktion aufrecht erhält. Eine derartige Fehlerstrom-Schutzeinrichtung ist beispielsweise aus der DE 197 35 412 A1 bekannt.

Die bekannte allstromsensitive Fehlerstrom-Schutzeinrichtung wird in elektrischen Anlagen zum Personen- und Anlagenschutz eingesetzt.

Beim Fehlerstrom unterscheidet man zwischen einem glatten Gleichfehlerstrom und einem pulsierenden Gleichfehlerstrom sowie einem Wechselfehlerstrom.

Beim Auftreten eines pulsierenden Gleichfehlerstromes oder eines Wechselfehlerstromes wird in der Wicklung des betreffenden Summenstromwandlers eine Spannung induziert, die durch die zugehörige Sensoreinrichtung ausgewertet wird. Zur Erfassung der beiden Stromarten kann also die magnetische Induktion herangezogen werden (pulsstromsensitives Erfassungsprinzip).

Beim Auftreten eines glatten Gleichfehlerstromes ist dieses Messprinzip nicht anwendbar, da sich der magnetische Fluss durch die Wicklung des betreffenden Summenstromwandlers nicht ändert und damit keine Spannung induziert wird. Zur Erfassung eines glatten Gleichfehlerstromes wird daher nach einem anderen Prinzip verfahren und zwar wird die Wicklung des Summenstromwandlers mit einer Wechselspannung beaufschlagt, so dass der Kern des Summenstromwandlers wechselweise magnetisiert wird. Der Kern des Summenstromwandlers wird also durch die Wechselspannung ausgesteuert. Tritt nun ein Gleichfehlerstrom auf, so verschiebt sich die Magnetisierung des Kerns, welche letztendlich von der Auswerteeinheit erfasst wird (gleichstromsensitives Erfassungsprinzip).

Zur Erfassung eines glatten Gleichfehlerstromes und eines pulsierenden Gleichfehlerstromes bzw. Wechselfehlerstromes werden bei der allstromsensitiven Fehlerstrom-Schutzeinrichtung gemäß der DE 197 35 412 A1 die beiden vorgenannten unterschiedlichen Erfassungsprinzipien mit getrennten Summenstromwandlern verwendet. Die pulsstromsensitive Erfassung ist bei der aus der DE 197 35 412 A1 bekannten Fehlerstrom-Schutzeinrichtung netzspannungsunabhängig realisiert, wohingegen die gleichstromsensitive Erfassung netzspannungsabhängig realisiert ist.

Bei der bekannten Fehlerstrom-Schutzeinrichtung überwachen die erste Sensoreinrichtung und die zweite Sensoreinrichtung über jeweils einen eigenen Summenstromwandler ständig parallel das Leitungsnetz und arbeiten parallel auf eine Auslöseeinrichtung.

Um eine Rückwirkung der ersten Sensoreinrichtung auf das Auslöseverhalten der zweiten Sensoreinrichtung zu vermeiden, ist in der zur Auslöseeinrichtung führenden Steuerleitung eine erste Entkopplungseinrichtung geschaltet.

Bei der allstromsensitiven Fehlerstrom-Schutzeinrichtung gemäß der DE 197 35 412 A1 beeinflussen sich die Auslösezeiten und Auslöseströme gegenseitig nicht, so dass bei einer Kombination der beiden Fehlerstrom-Auslöseschaltungen die charakteristischen Daten für die einzelnen Fehlerstrom-Auslöseschaltungen, d.h. der Nennfehlerstrom und die Auslösezeitverzögerung der ihnen jeweils zugeordneten Fehlerstromarten, auch bei Kombination unverändert bleiben. Damit können die geforderten Auslösefehlerstrom- und Auslösezeitgrenzen bei Wechselfehlerstrom, pulsierendem Gleichfehlerstrom und glattem Gleichfehlerstrom entsprechend den Vorschriften (VDE, ÖVE, EN, IEC) eingehalten werden.

Die aus der DE 197 35 412 A1 bekannte Fehlerstrom-Schutzreinrichtung weist jedoch aufgrund ihres Aufbaus (2 Summenstromwandler, bis zu 2 Entkopplungseinrichtungen) ein relativ großes Bauvolumen und damit einen entsprechenden Energieverbrauch sowie eine entsprechende Wärmeabstrahlung auf.

Die WO 86/06222 A1 beschreibt eine Fehlerstrom-Schutzeinrichtung mit einer ersten, netzspannungsunabhängigen Sensoreinrichtung zum Erfassen von Wechselfehlerstrom und einer zweiten, netzspannungsabhängigen Sensoreinrichtung zum Erfassen von ausschließlich Gleichfehlerstrom, wobei beide Sensoreinrichtungen gemeinsam mit einem Summenstromwandler gekoppelt sind. Bei einer Ausführungsform umfasst der Summenstromwandler sowohl eine Sekundärspule zur Kopplung mit der ersten Sensoreinrichtung und eine Tertiärspule zur Kopplung mit der zweiten Sensoreinrichtung. Bei einer anderen Ausführungsform umfasst der Summenstromwandler eine Spule, die mit beiden Sensoreinrichtungen gekoppelt ist.

Die EP 0 866 536 A2 beschreibt einen allstromsensitiven Fehlerstromschalter. Eine Sekundärwicklung eines Summenstromwandlers ist mit zwei Auswertezweigen verbunden, die zur Detektion von Pulsfehlerströmen bzw. Gleichfehlerströmen ausgelegt sind. Zwischen die Sekundärwicklung und die jeweiligen Auswertezweige sind Mittel zum selektiven Einspeisen von Pulsstrom und/oder Gleichstrom in den jeweiligen Auswertesignalzweig vorgesehen. Diese Mittel sind dabei als Bandsperre bzw. Bandpass ausgebildet.

Aufgabe der vorliegenden Erfindung ist es deshalb, eine Fehlerstrom-Schutzreinrichtung der eingangs genannten Art zu schaffen, die einfach aufgebaut ist und eine geringere Baugröße aufweist.

Die Aufgabe wird erfindungsgemäß durch eine allstromsensitive Fehlerstrom-Schutzreinrichtung mit den Merkmalen des Anspruchs 1 gelöst. Vorteilhafte Ausgestaltungen der erfindungsgemäßen Fehlerstrom-Schutzreinrichtung sind jeweils Gegenstand von weiteren Ansprüchen.

Die allstromsensitive Fehlerstrom-Schutzeinrichtung gemäß Anspruch 1 umfasst eine erste, netzspannungsunabhängige Sensoreinrichtung für Wechselfehlerstrom und pulsierenden Gleichfehlerstrom sowie eine zweite, netzspannungsabhängige Sensoreinrichtung für glatten Gleichfehlerstrom, Wechselfehlerstrom und pulsierenden Gleichfehlerstrom, wobei die erste Sensoreinrichtung und die zweite Sensoreinrichtung parallel zueinander an eine Steuerleitung einer Auslöseeinrichtung angeschlossen sind. Die Fehlerstrom-Schutzein richtung weist weiterhin einen Summenstromwandler auf, dessen Wicklung die Sekundärwicklung für die erste Sensoreinrichtung und die Steuerwicklung für die zweite Sensoreinrichtung bildet, wobei die Wicklung über eine Entkopplungseinrichtung entweder an die erste Sensoreinrichtung oder an die zweite Sensoreinrichtung angebunden ist und über einen Messwiderstand auf Bezugspotenzial geführt ist.

Anstelle von zwei Summenstromwandlern weist die Fehlerstrom-Schutzeinrichtung einen gemeinsamen Summenstromwandler für die erste Sensoreinrichtung und für die zweite Sensoreinrichtung auf. Damit wird gegenüber der aus der DE 197 35 412 A1 bekannten Fehlerstrom-Schutzreinrichtung ein Summenstromwandler eingespart.

Aufgrund der Spannungseinkopplung tritt keine gegenseitige Beeinflussung der ersten Sensoreinrichtung (netzspannungsunabhängige FI-Erfassung) und der zweiten Sensoreinrichtung (netzspannungsabhängigen DI-Erfassung)auf. Damit können beide Sensoreinrichtungen jeweils für sich getrennt betrachtet und entsprechend den Erfordernissen dimensioniert werden.

Trotz des einfacheren Aufbaus können damit durch die erfindungsgemäße Fehlerstrom-Schutzeinrichtung die geforderten Auslösefehlerstrom- und Auslösezeitgrenzen bei Wechselfehlerstrom, pulsierendem Gleichfehlerstrom und glattem Gleichfehlerstrom entsprechend den Vorschriften (VDE, ÖVE, EN, IEC) eingehalten werden.

Gemäß einer vorteilhaften Ausgestaltung der Erfindung ist die Einrichtung zur Gegenspannungserzeugung als transformatorische Spannungseinkopplung ausgeführt, wobei die transformatorische Spannungseinkopplung wenigstens einen Einkopplungstransformator aufweist, der zwischen der Wicklung des Summenstromwandlers und der ersten Sensoreinrichtung angeordnet ist, und wobei die Wicklung an eine geregelte Wechselspannungsquelle geführt ist. Hierbei ist besonders vorteilhaft, den Einkopplungstransformator über seine Primärwicklung von einer geregelten Spannungsquelle zu speisen und den Einkopplungstransformator über seine Sekundärwicklung zwischen die Wicklung des Summenstromwandlers und die erste Sensoreinrichtung zu schalten.

Es ist möglich, dass die Wicklung des Summenstromwandlers aus zwei getrennten Wicklungen besteht, wobei die eine Wicklung für die erste Sensoreinrichtung und die andere Wicklung für die zweite Sensoreinrichtung vorgesehen ist.

Es kann eine Selbstüberwachungseinrichtung vorgesehen sein, durch die im Fehlerfall die Auslöseeinrichtung betätigbar ist.

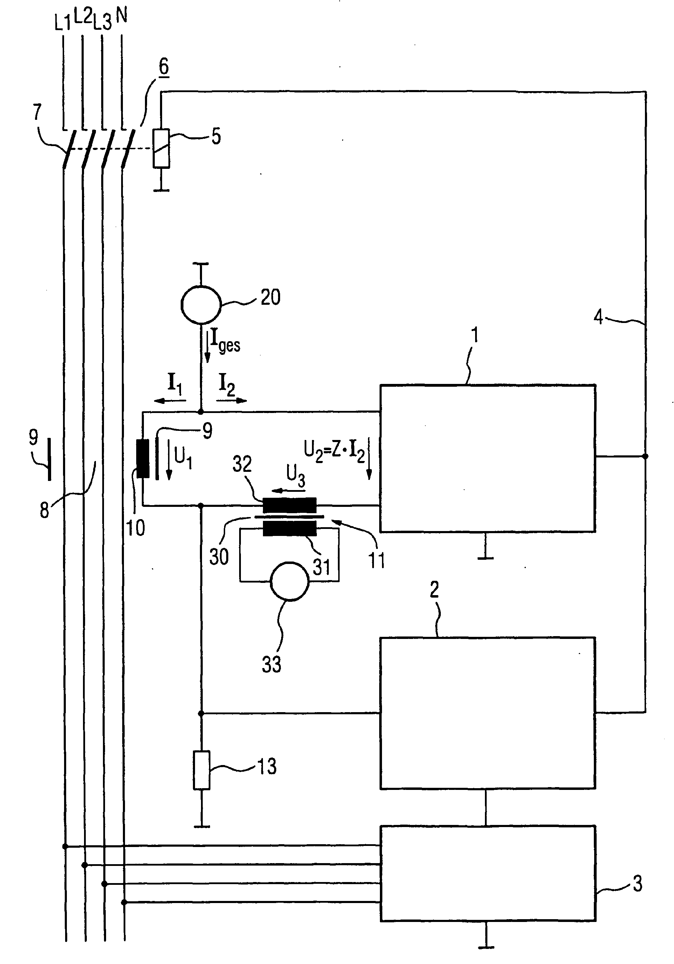

Ein Ausführungsbeispiel der Erfindung wird nachfolgend anhand der Zeichnung näher erläutert.

Die in der einzigen Figur dargestellte Ausführungsform der allstromsensitiven Fehlerstrom-Schutzeinrichtung umfasst eine erste, netzspannungsunabhängige Sensoreinrichtung 1 sowie eine zweite, netzspannungsabhängige Sensoreinrichtung 2, die von einem Netzteil 3 mit Spannung versorgt wird. Die erste Sensoreinrichtung 1 ist für die Erfassung von Wechselfehlerströmen und pulsierenden Gleichfehlerströmen ausgelegt. Die zweite Sensoreinrichtung 2 dient zur Erfassung von glatten Gleichfehlerströmen, und optional zur Erfassung von Wechselfehlerströmen und pulsierenden Gleichfehlerströmen.

Die erste Sensoreinrichtung 1 und die zweite Sensoreinrichtung 2 sind bei dem gezeigten Ausführungsbeispiel parallel zueinander an eine Steuerleitung 4 eines Relais 5 einer Auslöseeinrichtung 6 angeschlossen. Das Relais 5 wirkt auf einen zur Auslöseeinrichtung 6 gehörenden Schaltmechanismus 7.

Die Fehlerstrom-Schutzeinrichtung weist weiterhin einen Summenstromwandler 8 auf, der zur Überwachung eines mehrphasigen Netzes mit den Außenleitern L1, L2, L3 und dem Nullleiter N dient. Der Summenstromwandler 8 weist einen Kern 9 auf, der eine Wicklung 10 trägt. Die Wicklung 10 bildet die Sekundärwicklung für die erste Sensoreinrichtung 1. Die Primärwicklungen werden hierbei von den Außenleitern L1, L2 und L3 und dem Nullleiter N gebildet. Die Wicklung 10 bildet weiterhin die Steuerwicklung für die zweite Sensoreinrichtung 2.

Um eine gegenseitige Beeinflussung der beiden Sensoreinrichtungen 1 und 2 zuverlässig zu vermeiden, ist zwischen die Wicklung 10 und die Sensoreinrichtung 1 eine Einrichtung zur Gegenspannungserzeugung 11 geschaltet.

Die Wicklung 10 des Summenstromwandlers 8 ist außerdem an eine Wechselspannungsquelle 20 geführt. Weiterhin ist die Wicklung 10 über einen Messwiderstand 13 auf Bezugspotenzial geführt.

Im dargestellten Ausführungsbeispiel ist die Einrichtung zur Gegenspannungserzeugung 11 als transformatorische Spannungseinkopplung ausgeführt.

Die transformatorische Spannungseinkopplung 11 weist bei der gezeigten Ausführungsform einen Einkopplungstransformator 30 auf, der über seine Primärwicklung 31 von einer geregelten Spannungsquelle 33 gespeist ist. Der Einkopplungstransformator 30 ist weiterhin mit seiner Sekundärwicklung 32 zwischen der Wicklung 10 des Summenstromwandlers 8 und der ersten Sensoreinrichtung 1 geschaltet.

Der netzspannungsabhängige Teil der allstromsensitiven Fehlerstromeinrichtung, der die zweite, netzspannungsabhängige Sensoreinrichtung enthält, arbeitet nach dem bekannten Prinzip der gesteuerten Induktivität.

Im Stromkreis des netzspannungsunabhängigen Teils, der die erste, netzspannungsunabhängige Sensoreinrichtung 1 enthält, wird über den Einkopplungstransformator 30 eine Gegenspannung U₃ transformatorisch eingekoppelt. Die eingekoppelte Gegenspannung U₃ wird nach Betrag und Phasenlage geregelt. Ist kein Fehlerstrom vorhanden, muss die vektorielle Summe der Gegenspannung U₃ und der Spannung U₁, die am Summenstromwandler 8 abfällt, Null ergeben. Damit muss der gesamte Strom I_{ges} der Wechselspannungsquelle 20 über den Summenstromwandler 8 fließen.

Die von Wechselfehlerströmen und pulsierenden Gleichfehlerströmen induzierte Spannung U₂ = Z · I₂ gelangt über den Einkopplungstransformator 30 zum netzspannungsunabhängigen Teil der allstromsensitiven Fehlerstromeinrichtung.

Aufgrund der transformatorischen Spannungseinkopplung 11 tritt keine gegenseitige Beeinflussung der ersten Sensoreinrichtung 1 (netzspannungsunabhängige FI-Erfassung) und der Spannungsquelle 20, welche für die zweite Sensoreinrichtung 2 (netzspannungsabhängigen DI-Erfassung) erforderlich ist, auf. Damit können beide Sensoreinrichtungen 1 und 2 jeweils für sich getrennt betrachtet und entsprechend den Erfordernissen dimensioniert werden.

Weiterhin wird der Spannungsabfall am Messwiderstand 13 in der zweiten Sensoreinrichtung 2 ausgewertet. Beim Vorliegen eines Auslösekriteriums wirkt die zweite Sensoreinrichtung 2 auf das Relais 5 der Auslöseeinrichtung 6, wodurch der Schaltmechanismus 7 geöffnet wird. durch die Auswertung des Spannungsabfalls am Messwiderstand 13 können durch die zweite Sensoreinrichtung 2 nicht nur glatte Gleichfehlerströme, sondern auch darüber hinaus auch Wechselfehlerströme und pulsierende Gleichfehlerströme erfasst werden.

## Patentansprüche

1. Allstromsensitive Fehlerstrom-Schutzeinrichtung mit
- einer ersten, netzspannungsunabhängigen Sensoreinrichtung (1) für Wechselfehlerstrom und pulsierenden Gleichfehlerstrom und mit
- einer zweiten, netzspannungsabhängigen Sensoreinrichtung
(2) für glatten Gleichfehlerstrom,
wobei
- die erste Sensoreinrichtung (1) und die zweite Sensoreinrichtung (2) parallel zueinander an eine Steuerleitung (4) einer Auslöseeinrichtung (6) angeschlossen sind, und
- die Fehlerstrom-Schutzeinrichtung einen Summenstromwandler (8) umfasst, dessen Wicklung (10) die Sekundärwicklung für die erste Sensoreinrichtung (1) und die Steuerwicklung für
die zweite Sensoreinrichtung (2) bildet,
**dadurch gekennzeichnet, dass**
- zwischen die Wicklung (10) und die erste Sensoreinrichtung (1) eine Einrichtung (11) zur Erzeugung einer Gegenspannung geschaltet ist, und **dass**
- die Wicklung (10) über einen Messwiderstand (13) auf Bezugspotenzial geführt ist und die zweite Sensoreinrichtung auch zum Erfassen von Wechselfehlerstrom und pulsierendem Gleichfehlerstrom ausgelegt ist.

2. Fehlerstrom-Schutzeinrichtung nach Anspruch 1, wobei
- die Einrichtung (11) zur Gegenspannungserzeugung als transformatorische Spannungseinkopplung ausgeführt ist, die wenigstens einen Einkopplungstransformator (30) aufweist, der zwischen der Wicklung (10) des Summenstromwandlers (8) und der ersten Sensoreinrichtung (1) angeordnet ist, und wobei
- die Wicklung (10) an eine Wechselspannungsquelle (20) geführt ist.

3. Fehlerstrom-Schutzeinrichtung nach Anspruch 1, wobei
- durch eine Selbstüberwachungseinrichtung im Fehlerfall die Auslöseeinrichtung (6) betätigbar ist.

4. Fehlerstrom-Schutzeinrichtung nach Anspruch 2, wobei
- der Einkopplungstransformator (30) über seine Primärwicklung (31) von einer geregelten Spannungsquelle (33) gespeist ist und über seine Sekundärwicklung (32) zwischen die Wicklung (10) des Summenstromwandlers (8) und die erste Sensoreinrichtung (1) geschaltet ist.

5. Fehlerstrom-Schutzeinrichtung nach Anspruch 1, wobei
- die Wicklung (10) des Summenstromwandlers (8) aus zwei getrennten Wicklungen besteht, wobei die eine Wicklung für die erste Sensoreinrichtung (1) und die andere Wicklung für die zweite Sensoreinrichtung (2) vorgesehen ist.

## Claims

1. All-current-sensitive fault current protection device having
- a first sensor device (1) that is independent of mains voltage for alternating current fault current and pulsating direct current fault current and having
- a second sensor device (2) that is dependent on mains voltage for smooth direct current fault current,
wherein
- the first sensor device (1) and the second sensor device (2) are connected parallel to one another to a control line (4) of a trigger device (6) and
- the fault current protection device comprises a summation current converter (8), the winding (10) of which forms the secondary winding for the first sensor device (1) and the control winding for the second sensor device (2), **characterised in that**
- a device (11) for generating a counter voltage is connected between the winding (10) and the first sensor device (1) and
- the winding (10) is taken to reference potential by way of a measuring resistor (13) and the second sensor device is also designed to detect alternating current fault current and pulsing direct current fault current.

2. Fault current protection device according to claim 1, wherein
- the device (11) for generating counter voltage is embodied as a transformer voltage injection, having at least one injection transformer (30), which is disposed between the winding (10) of the summation current converter (8) and the first sensor device (1) and wherein
- the winding (10) is taken to an alternating current voltage source (20).

3. Fault current protection device according to claim 1, wherein the trigger device (6) can be actuated by a self-monitoring device in the event of a fault.

4. Fault current protection device according to claim 2, wherein
- the injection transformer (30) is fed by a regulated voltage source (33) by way of its primary winding (31) and is connected between the winding (10) of the summation current converter (8) and the first sensor device (1) by way of its secondary winding (32).

5. Fault current protection device according to claim 1, wherein
- the winding (10) of the summation current converter (8) consists of two separate windings, the one winding being provided for the first sensor device (1) and the other winding being provided for the second sensor device (2).

## Revendications

1. Dispositif différentiel résiduel sensible à tout courant avec
- un premier dispositif de détection (1) de courant de défaut alternatif et de courant de défaut continu à impulsions indépendant de la tension de réseau et avec
- un deuxième dispositif de détection (2) de courant de défaut continu lissé dépendant de la tension de réseau,
- le premier dispositif de détection (1) et le deuxième dispositif de détection (2) étant raccordés parallèlement entre eux à une ligne de commande (4) d'un dispositif de déclenchement (6) et - le dispositif différentiel résiduel comprenant un convertisseur de courant de somme (8) dont l'enroulement (10) constitue l'enroulement secondaire pour le premier dispositif de détection (1) et l'enroulement de commande pour le deuxième dispositif de détection (2),
**caractérisé en ce que**
- un dispositif (11) pour générer une contre-tension est monté entre l'enroulement (10) et le premier dispositif de détection (1) et
- l'enroulement (10) est mis au potentiel de référence par l'intermédiaire d'une résistance de mesure (13) et le deuxième dispositif de détection est également conçu pour détecter un courant de défaut alternatif et un courant de défaut continu à impulsions.

2. Dispositif différentiel résiduel selon la revendication 1,
- le dispositif (11) de génération de contre-tension se présentant sous la forme d'une alimentation en tension par transformateur(s), laquelle comporte au moins un transformateur d'alimentation (30) qui est situé entre l'enroulement (10) du convertisseur de courant de somme (8) et le premier dispositif de détection (1) et
- l'enroulement (10) étant amené à une source de tension alternative (20).

3. Dispositif différentiel résiduel selon la revendication 1,
- le dispositif de déclenchement (6) pouvant être actionné par un dispositif d'autosurveillance en cas d'erreur.

4. Dispositif différentiel résiduel selon la revendication 2,
- le transformateur d'alimentation (30) étant alimenté par une source de tension réglée (33) via son enroulement primaire (31) et étant monté, par l'intermédiaire de son enroulement secondaire (32), entre l'enroulement (10) du convertisseur de courant de somme (8) et le premier dispositif de détection (1).

5. Dispositif différentiel résiduel selon la revendication 1,
- l'enroulement (10) du convertisseur de courant de somme (8) se composant de deux enroulements séparés, l'un des enroulements étant prévu pour le premier dispositif de détection (1) et l'autre enroulement, pour le deuxième dispositif de détection (2).
